# EUROPÄISCHE PATENTSCHRIFT

(11) **EP 3 631 258 B1**
(45) Veröffentlichungstag und Bekanntmachung des Hinweises auf die Patenterteilung: **03.03.2021**
(21) Anmeldenummer: 18725174.9
(22) Anmeldetag: 14.05.2018
(51) Int. Cl.: F16K 1/50, F16K 1/44, F16K 41/12

(54) **MEMBRANGEDICHTETES DOPPELSITZVENTIL UND ANTRIEB**
DIAPHRAGM-SEALED DOUBLE-SEAT VALVE AND DRIVE
SOUPAPE À DOUBLE SIÈGE ÉTANCHÉIFIÉE PAR MEMBRANE ET ENTRAÎNEMENT

(30) Priorität: 26.05.2017 DE 102017005062
(43) Veröffentlichungstag der Anmeldung: 08.04.2020
(73) Patentinhaber: GEA Tuchenhagen GmbH, 21514 Büchen (DE)
(72) Erfinder: BURMESTER, Jens, 23883 Grambek (DE); PIEPLOW, Jörg, DE- 23919 Rondeshagen (DE); TEGTMEYER, Stephanie, 21037 Hamburg (DE)
(74) Vertreter: Hauck Patentanwaltspartnerschaft mbB
(86) Internationale Anmeldenummer: PCT/EP2018/062377
(87) Internationale Veröffentlichungsnummer: WO 2018/215229

(56) Entgegenhaltungen:
- EP-A1- 2 734 757
- EP-A1- 2 734 757
- DE-A1-102006 025 653
- DE-A1-102006 025 653

## Beschreibung

Die Erfindung betrifft ein membrangedichtetes Doppelsitzventil nach dem Oberbegriff des ersten Anspruchs.

Einsitzventile mit einer im Wesentlichen ringförmigen Membran, die einen Innenrand und einen Außenrand aufweist und deren Innenrand mittelbar oder unmittelbar an einem Schließelement und deren Außenrand am Gehäuse des Einsitzventils festgelegt sind, sind im Stand der Technik bekannt, beispielsweise aus der WO 2013/170931 A1.

Doppelsitzventile, in denen ein erstes und ein zweites Schließelement vorhanden sind, die jeweils mit einem zugeordneten Ventilsitz zusammenwirken, wobei die Schließelemente unabhängig voneinander in angelüftete Stellungen bringbar sind, sind ebenfalls Einsetzfelder. Bei solchen Ventilen ist es ein Ziel, eine zweite Membran zwischen den Schließelementen anzuordnen. Damit soll der Spalt zwischen den teleskopartig ineinandergreifenden Ventilstangen abgedichtet werden.

Im Stand der Technik wurden verschiedene Lösungen vorgeschlagen, insbesondere die DE 102006025653 A1 und die EP 2734757 B1. Die beiden dort vorgeschlagenen Ventile besitzen Ventilstangen und Schließkörper, die aus vielen Einzelteilen zusammengesetzt sind.

Es war nun Aufgabe ein Doppelsitzventil mit zwei Membranen vorzustellen, das einen einfachen Aufbau aufweist und dessen sichere Funktion gewährleistet ist.

Diese Aufgabe wird gelöst durch ein Doppelsitzventil mit den Merkmalen des ersten Anspruchs. In den davon abhängigen Ansprüchen sind vorteilhafte Weiterbildungen angegeben.

Vorgeschlagen ist ein Doppelsitzventil mit einem ersten und einem zweiten Schließelement, welche einem ersten und einem zweiten Ventilsitz zugeordnet sind, mit einer Hohlstange, die mit dem zweiten Schließelement verbunden ist, und einer Ventilstange, die mit dem ersten Schließelement verbunden und die Hohlstange durchsetzend angeordnet ist, mit einer ersten Membran, welche an der Hohlstange und an einem Gehäuse des Doppelsitzventils befestigt ist und mit einer zweiten Membran, die einen Kanal zwischen Ventilstange und Hohlstange abdichtend angeordnet ist, wobei das zweite Schließelement einen Ringkörper umfasst, welcher mit einem Tragabschnitt verbunden ist, wobei Ringkörper und Tragabschnitt zur Klemmung der zweiten Membran eingerichtet und gegeneinander mit der zweiten Membran und mit einer Spaltdichtung abgedichtet sind. Der Tragabschnitt weist einen Leckagekanal auf, welcher einen Abschnitt einer Fluidverbindung zwischen Verbindungsbereich und Kanal bildet. Sollte die zweite Membran oder die Spaltdichtung undicht werden und Fluid in den Verbindungsbereich eintreten, ist dieser aufgrund der vorgeschlagenen Konstruktion nachweisbar. Dies bedeutet im Zusammenspiel mit der Benutzung zweier Membranen einen hygienischen Aufbau im Betrieb mit sicherem Nachweis von Funktionseinschränkungen, beispielsweise dem Versagen der zweiten Membran. Die Konstruktion weist wenige Einzelteile im Vergleich zum Stand der Technik auf und ist daher zum einen kostengünstiger und zum anderen schneller und sicherer in der Montage und im Service.

Der Aufbau des Doppelsitzventils wird zusätzlich vereinfacht, wenn die Hohlstange die erste Membran und ein erstes Klemmelement einstückig in Richtung einer Hubachse durchsetzt. Dies beseitigt zudem eine mögliche Schadensstelle.

Ein zweites Lager ist ein zweites Klemmelement lagernd und führend angeordnet. Hierdurch ist ein weiter Spalt zwischen Ventilstange und Hohlstange überhaupt erst möglich. Dieser weite Spalt wiederum bedeutet einen sichereren und besseren Nachweis von Leckage, die bei Versagen der zweiten Membran oder der Spaltdichtung entsteht.

In einer Weiterbildung des Doppelsitzventils ist vorgesehen, dass die Spaltdichtung eingerichtet und angeordnet ist, mit dem zweiten Ventilsitz zusammenzuwirken. Dadurch lässt sich das Ventil besser reinigen und Stellen werden verringert, an denen sich Fluidreste anlagern können.

In einer Weiterbildung des Doppelsitzventils ist ein Sicherungsmittel am zweiten Schließelement angeordnet, das eine Verdrehung von erstem und zweitem Teil gegeneinander verhindert. Dies gewährleistet eine sichere Funktion des Doppelsitzventils und verhindert das Lösen der Verbindung von erstem und zweitem Teil insbesondere im Betrieb.

Die Dichtfunktion der Membranen und die Lebensdauer werden erhöht, wenn die Einleitung einer Torsionskraft, die zu einer mechanischen Belastung der Einspannstellen der Membranen und der Membranen selbst führt, verhindert wird. Um dies zu erreichen wird vorgeschlagen, dass ein Hauptantrieb einen in einem Zylinder verschiebbaren Kolben, eine Antriebsstange und eine Feder aufweist, und dass ein erstes Drehstabilisierungsmittel vorgesehen ist, welches eine Hubbewegung einer von Ventilstange und Hohlstange gegen Verdrehung stabilisiert.

In einer ersten Ausführung des Drehstabilisierungsmittels wird vorgeschlagen, dass dieses eine den Kolben drehbar auf der Antriebsstange lagernde Gleitlagerung umfasst. Dies ist eine kostengünstige und sichere Ausführung.

Eine weitere kostengünstige Ausführung des Drehstabilisierungsmittels sieht vor, dass das erste Drehstabilisierungsmittel einen Kolbenabschnitt mit einer einen Stab aufnehmenden Ausnehmung umfasst, wobei der Stab in der Ausnehmung nur in Richtung der Hubachse beweglich ist.

Sofern ein Hilfsantrieb vorgesehen ist, kann ein zweites Drehstabilisierungsmittel im Hilfsantrieb vorgesehen sein. Dies ermöglicht es, das Einwirken einer Torsionskraft auf Ventilstange und/oder Hohlstange bereits antriebsseitig zu verhindern. Dies vereinfacht die Konstruktion des Ventils im Bereich von Ventilstange und Hohlstange.

Die gezeigten Bauformen sind vorteilhaft, da sie ermöglichen, große Partikel im Fluid durch das Doppelsitzventil hindurchfließen zu lassen und Blockade vermeiden.

Anhand von Ausführungsbeispielen sollen die Erfindung erklärt und die Vorteile erläutert werden.

Es zeigen:
- Fig. 1:: Schnitt durch ein Doppelsitzventil mit zwei Membranen;
- Fig. 2:: geschnittene Detailansicht des Bereichs der zweiten Membran;
- Fig. 3:: geschnittene Detailansicht eines Doppelsitzventils mit einer geteilten Dichtungsnut im zweiten Teller;
- Fig. 4:: Schnitt durch einen pneumatischen Antrieb.

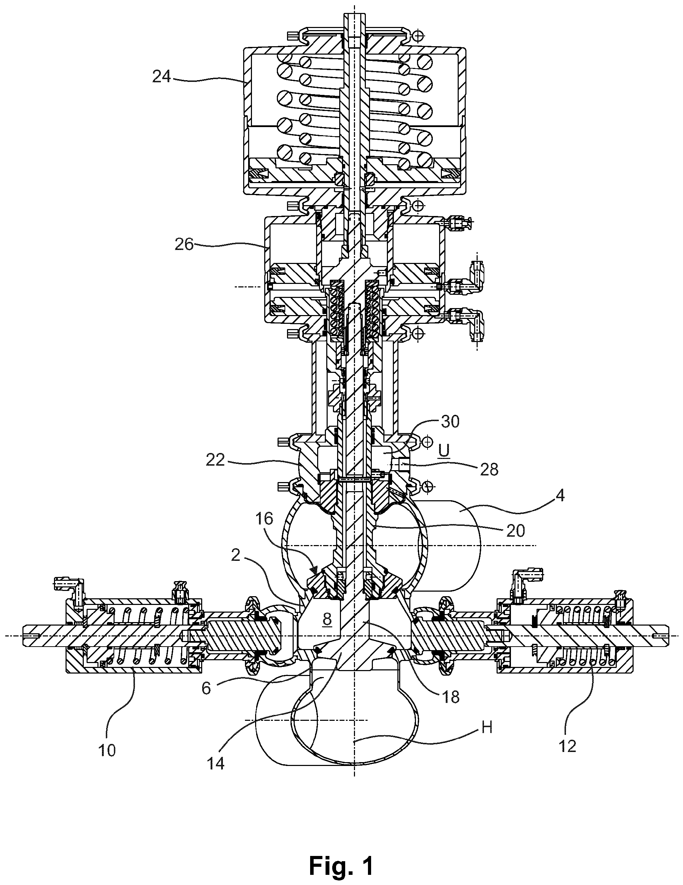

In Fig. 1 ist ein Doppelsitzventil in einem Schnitt entlang einer Hub- Längsachse und H gezeigt. Das Doppelsitzventil besitzt ein Gehäuse 2 mit einem ersten Anschluss 4 und einem zweiten Anschluss 6. Im Gehäuse 2 ist ein Fluidpfad zwischen erstem und zweitem Anschluss 4 und 6 ausgebildet, der abschnittsweise in einer Zwischenkammer 8 verläuft.

Ein erstes Seitenventil 10 und vorzugsweise ein zweites Seitenventil 12 sind am Gehäuse 2 so angeschlossen, dass sie mit der Zwischenkammer 8 fluidverbindbar sind. Mit diesen Seitenventilen 10 und 12 kann beispielsweise Leckage aus der Zwischenkammer 8 aus dem Doppelsitzventil abgeführt und die Zwischenkammer 8 kann gereinigt werden. Auch ist es möglich eine Sterilbarriere, beispielsweise eine Dampfsperre, in der Zwischenkammer 8 auszubilden. Vorteilhaft ist wenigstens eines der Seitenventile 10 und 12 so an die Zwischenkammer 8 angeschlossen, dass Fluid aus dieser rückstandslos abläuft, wenn die Hubachse H parallel zur Schwerkraft ausgerichtet ist.

Innerhalb des Gehäuses 2 sind ein erstes und ein zweites Schließelement 14 und 16 derart angeordnet, dass sie entlang der Hubachse H bewegbar sind. Das erste Schließelement 14 ist mit einer Ventilstange 18 verbunden. Das zweite Schließelement 16 ist mit einer Hohlstange 20 verbunden, wobei die Ventilstange 18 wenigstens über einen Teil ihrer Erstreckung innerhalb der Hohlstange 20 angeordnet ist und sich Ventilstange 18 und Hohlstange 20 entlang der Hubachse H erstrecken und ein- oder mehrteilig ausgeführt sind. Die Stangen 18 und 20 sind aus dem Gehäuse 2 hinausgeführt und durchsetzen ein Gehäuseteil 22. Außerhalb des Gehäuses 2 sind Ventilstange 18 und Hohlstange 20 mit einem Hauptantrieb 24 wirkverbunden.

Der Hauptantrieb 24 ist vorzugweise als pneumatischer Antrieb ausgeführt und ist eingerichtet, eine Öffnungsstellung und eine Schließstellung des Doppelsitzventils zu bewirken. In der Öffnungsstellung ist eine Fluidverbindung zwischen erstem Anschluss und zweitem Anschluss hergestellt, in der Schließstellung ist sie unterbunden. Die Anordnung aus Ventilstange 18, Hohlstange 20 und Hauptantrieb 24 kann so ausgeführt sein, dass durch Wirkung des Hauptantriebes 24 die Ventilstange 18 bewegt und die Hohlstange 20 bei dieser Bewegung mitgenommen wird.

Ein Hilfsantrieb 26 kann vorgesehen sein, der ebenfalls als pneumatischer Antrieb ausgeführt sein kann. Dieser Hilfsantrieb 26 ist vorzugsweise eingerichtet, Ventilstange 18 und Hohlstange 20 unabhängig voneinander entlang der Hubachse H zu bewegen. Dabei werden die Stangen 18 und 20 in Teilhubstellungen gebracht, in denen jeweils eines der Schließelemente 14 und 16 in Schließstellung bleibt, während das jeweils andere Schließelement 14 und 16 in eine geöffnete Stellung gebracht ist.

Die Antriebe 24 und 26 sind direkt oder indirekt mit dem Gehäuseteil 22 mechanisch verbunden. Das Gehäuseteil 22 besitzt einen Leckageauslass 28, mit dem ein Sammelraum 30 innerhalb des Gehäuseteils mit der Umgebung U des Gehäuseteils verbindbar ist.

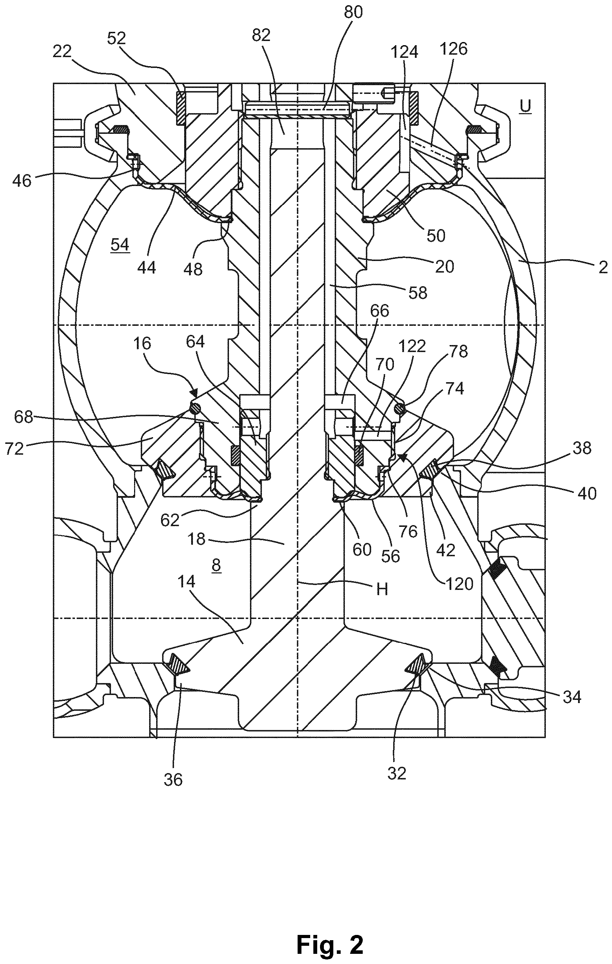

Zur besseren Veranschaulichung ist in Fig. 2 der Bereich des Gehäuses 2 in einer geschnittenen Detailansicht gezeigt.

Am ersten Schließelement 14 ist eine erste Dichtung 32 in einer Nut aufgenommen. Diese erste Dichtung 32 wirkt mit einem ersten Ventilsitz 34 in Schließstellung des ersten Schließelements 14 dichtend zusammen. Die erste Dichtung 32 ist axial dichtend oder halbaxial dichtend ausgeführt. Das erste Schließelement 14 kann einen ersten Fortsatz 36 aufweisen, der so angeordnet und gestaltet ist, dass in der Teilhubstellung des ersten Schließelements 14 ein Drosselspalt zwischen erstem Fortsatz 36 und Gehäuse 2 ausgebildet ist. Ein Drosselspalt bewirkt insbesondere eine Beschleunigung des ihn durchströmenden Fluids und somit eine Verbesserung der Reinigung, die in Teilhubstellung ausgeführt wird.

Am zweiten Schließelement 16 ist eine zweite Dichtung 38 in einer Nut aufgenommen. Diese zweite Dichtung 38 wirkt mit einem zweiten Ventilsitz 40 in Schließstellung des zweiten Schließelements 16 dichtend zusammen. Die zweite Dichtung 38 ist axial dichtend oder halbaxial dichtend ausgeführt. Das zweite Schließelement 16 kann einen zweiten Fortsatz 42 aufweisen, der so angeordnet und gestaltet ist, dass in der Teilhubstellung des zweiten Schließelements 16 ein Drosselspalt zwischen zweitem Fortsatz 42 und Gehäuse 2 ausgebildet ist.

Eine im Wesentlichen ringförmig gestaltete erste Membran 44 weist einen Außenrand 46 auf, welcher zwischen Gehäuseteil 22 und Gehäuse 2 festgelegt ist. Um einen Hub zu gestatten, besitzt die erste Membran 44 einen gewellten Querschnitt, so dass ein Innenrand 48 der ersten Membran 44 domartig ausgestülpt ist. Dieser Innenrand 48 ist an der Hohlstange 20 festgelegt. Hierzu kann ein erstes Klemmelement 50 vorgesehen sein, das auf der Hohlstange 20 fixierbar ist. Vorteilhaft ist das Klemmelement 50 so ausgeführt, dass sich die erste Membran 44 abschnittsweise an das Klemmelement 50 anlegt, so dass die erste Membran 44 vom Druck des Fluides im Doppelsitzventil entlastet wird. An einer Außenwand des Klemmelements 50 kann eine Leckagenut 124 vorgesehen sein, die sich vorzugweise etwa in Richtung der Hubachse H erstreckt. Sie kann sich nur über einen der Membran 44 abgewandten Teil der Außenwand erstreckend ausgeführt sein und mit einem Querkanal 126 im Gehäuseteil 22 fluidführend zusammenwirken. Leckage, die auf eine Undichtigkeit der ersten Membran 44 zurückgeht, kann mit Hilfe der Leckagenut 124 und dem optionalen Querkanal 126 aus dem Doppelsitzventil abgeführt und somit zuverlässiger nachgewiesen werden.

Im Gehäuseteil 22 ist eine Ausnehmung vorgesehen, die das Klemmelement 50 aufnimmt. In dieser Ausnehmung ist ein erstes Lager 52 angeordnet, dass das Klemmelement 50 gleitend lagert, so dass dieses in der Ausnehmung entlang der Hubachse H bewegbar ist.

Die solcherart angeordnete erste Membran 44 dichtet einen Innenraum 54 des Doppelsitzventils gegen die Umgebung U ab.

Eine zweite Membran 56 ist am zweiten Schließelement 16 vorgesehen, um einen zwischen Ventilstange 18 und Hohlstange 20 ausgebildeten Kanal 58 gegen den Zwischenraum 8 abzudichten.

Die zweite Membran 56 besitzt einen Innenrand 60, der zwischen einem Absatz 62 an der Ventilstange 18 und einem zweiten Klemmelement 64 geklemmt und dadurch festgelegt ist. Das zweite Klemmelement 64 ist in einer Erweiterung 66 des Kanals 58 aufgenommen, wobei die Erweiterung 66 in einem Tragabschnitt 68 der Hohlstange 20 angeordnet ist. Ein zweites Lager 70 ist in dem Tragabschnitt 68 aufgenommen. Position und Material des zweiten Lagers 70 sind gewählt, eine axiale Bewegung des zweiten Klemmelements 64 in der Erweiterung 66 zu führen und zu lagern. Auf diese Weise werden direkt das zweite Klemmelement 64 und indirekt die Ventilstange 18 gelagert und in der Hubbewegung entlang der Hubachse H geführt. Diese Führung ist hochgenau, da sie auf einem großen Durchmesser stattfindet. Zudem ermöglicht dieser Aufbau einen Kanal 58 mit einem großen Durchflussquerschnitt, der im Vergleich zum bekannten Stand der Technik größer ist. Die Anzeige von Leckage, die beispielsweise auf einen notwendigen Austausch der zweiten Membran 56 hinweist, ist daher deutlich verbessert.

Der Tragabschnitt 68 trägt einen Ringkörper 72, welcher einen Teil des zweiten Schließelements 16 bildet und die zweite Dichtung 38 trägt. Ein Gewinde 74 stellt eine lösbare Verbindung zwischen Tragabschnitt 68 und Ringkörper 72 her. Ein Außenrand 76 der zweiten Membran 60 ist zwischen Tragabschnitt 68 und Ringkörper 72 gehaltert, insbesondere durch geeignete Führung und Klemmung sowie Formschluss. Die zweite Membran 60 bewirkt zugleich eine Abdichtung des Gewindes 74 gegen die Zwischenkammer 8. Die dem Innenraum 54 zugewandte Verbindung von Tragabschnitt 68 und Ringkörper 72 und damit das Gewinde 74 sind durch eine Spaltdichtung 78 abgedichtet. Diese Spaltdichtung 78 ist vorteilhaft in einer Nut am Tragabschnitt 68 aufgenommen und wird dort zunächst montiert, bevor der Ringkörper 72 auf das Gewinde 74 geschraubt wird. Diese Gestaltung ermöglicht es, die dem Innenraum 54 zugewandte Oberflächen von Tragabschnitt 68 und Ringkörper 72 als Schrägen auszubilden und besonders gut ablaufend zu formen, so dass Fluid rückstandsfrei vom zweiten Schließelement 16 abläuft, ohne dabei von der Spaltdichtung 78 behindert zu werden.

In der Hohlstange 20 ist ein Hohlstift 80 gehaltert, welcher ein Langloch 82 durchsetzt, das sich in der Ventilstange 18 befindet. Das Langloch 82 ist so angeordnet und geformt, dass es mit der Hohlstift 80 zusammenwirkend eine relative Bewegung der Ventilstange 18 gegen die Hohlstange 20 in Richtung der Hubachse H erlaubt, eine rotative Bewegung der Stangen 18 und 20 gegeneinander jedoch verhindert. Dies verhindert eine Torsionsbelastung der zweiten Membran 56. Der Hohlstift 80 kann auch als zylindrischer Stift aus Vollmaterial ausgeführt sein.

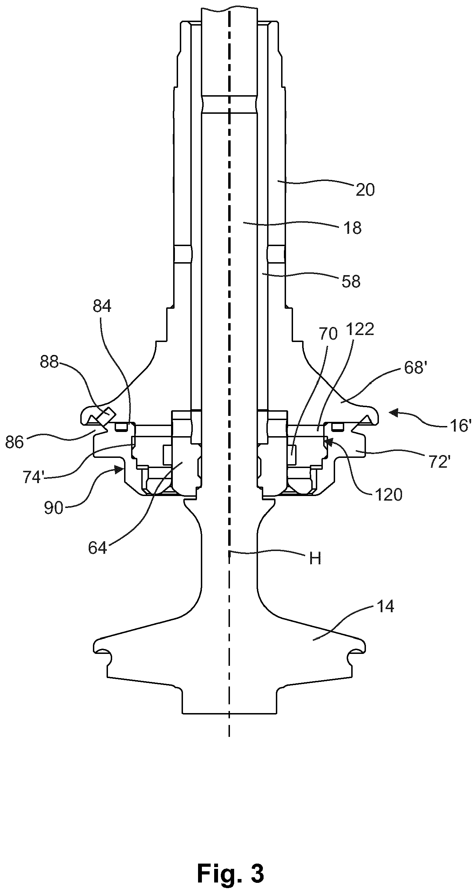

In Fig. 3 ist eine Weiterbildung des Doppelsitzventils gezeigt, die sich insbesondere auf die Spaltdichtung 78 und die zweite Dichtung 38 bezieht.

Das erste Schließelement 14 ist unverändert vom vorangegangenen Beispiel übernommen worden, ebenso die Ventilstange 18 und die Hohlstange 20. Die wesentliche Änderung betrifft das zweite Schließelement 16'.

Das zweite Schließelement 16' umfasst einen Ringkörper 72', der mit einem Tragabschnitt 68' verbunden ist, beispielsweise mit Hilfe eines Gewindes 74'. Um die Dichtungsanordnung zu vereinfachen und auf eine Dichtung verzichten zu können, ist im Verbindungsbereich 120 eine Fuge 84 zwischen Tragabschnitt 68' und Ringkörper 72' so geformt, dass sie an einer Dichtungsnut 86 endet, welche zur Aufnahme der Spaltdichtung 78 ausgeformt ist. Die Kontur der Dichtungsnut 86 kann abschnittsweise in Tragabschnitt 68' und Ringkörper 72' verlaufen. Durch diese Ausgestaltung übernimmt die Spaltdichtung 78 zusätzlich zur Abdichtung des Verbindungsbereichs 120 die Funktion der zweiten Dichtung 38 und wirkt mit dem zweiten Ventilsitz 40 zusammen. Neben einer verringerten Anzahl von Teilen ergibt sich als zusätzlicher Vorteil eine hygienischere Konstruktion, unter anderem, da diese Anordnung leichter gereinigt werden kann.

Um ein Lösen der Schraubverbindung zwischen Tragabschnitt 68' und Ringkörper 72' zu verhindern, ist es vorteilhaft, ein Sicherungsmittel 88 vorzusehen, beispielsweise eine Madenschraube. Das Sicherungsmittel 88 bildet einen die Drehung verhindernden Formschluss mit dem Ringkörper 72' und mit dem Tragabschnitt 68'. Vorteilhaft ist es, das Sicherungsmittel am Grund der Dichtungsnut 86 anzuordnen, so dass es im montierten Zustand des Doppelsitzventils von der zweiten Dichtung 38 abgedeckt und somit für Fluid im Doppelsitzventil unzugänglich ist.

Auf einer dem Tragabschnitt 68' abgewandten Seite weist der Ringkörper 72' vorteilhaft wenigstens eine Ansatzfläche 90 auf. Diese ist eingerichtet, um mit einem Werkzeug zusammenzuwirken, mit dem die Schraubverbindung zwischen Tragabschnitt 68' und Ringkörper 72' hergestellt wird.

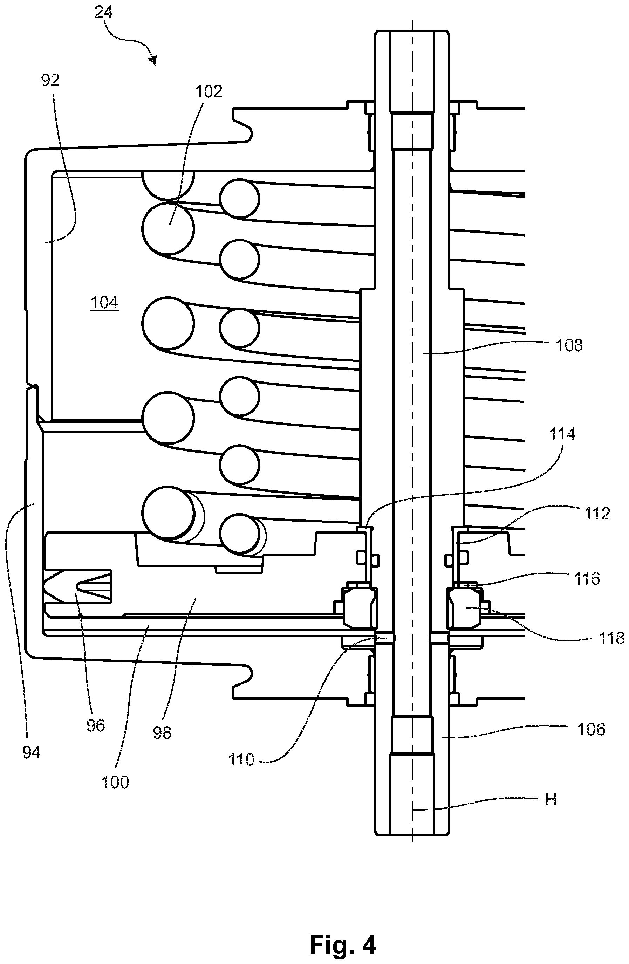

In Fig. 4 ist ein Ausschnitt aus einer vorteilhaften Ausführung des druckmittelbetriebenen Hauptantriebes 24 dargestellt.

Der Hauptantrieb 24 besitzt ein erstes Zylinderteil 92 und ein zweites Zylinderteil 94. Die Zylinderteile 92 und 94 bilden zusammen ein Antriebsgehäuse und eine Lauffläche des Hauptantriebes 24. Auf dieser Lauffläche gleitet eine Kolbendichtung 96, die in einer Umfangsnut eines Kolbens 98 aufgenommen ist. Der Kolben 98 unterteilt einen Innenraum des Haupantriebes 24 in zwei Kammern. Eines ist eine Druckmittelkammer 100, in der ein Druckmittel, in der Regel ein Gas, eingelassen werden kann, um eine Kraft auf den Kolben 98 zu erzeugen, die eine Verschiebung des Kolbens 98 entlang der Hubachse H bewirkt. Dabei arbeitet die Kraft gegen eine Rückstellkraft, die von einer Feder 102 erzeugt wird, welche sich in der Federkammer 104 befindet, welches die zweite Kammer ist.

Der Kolben 98 ist auf einer Antriebsstange 106 befestigt, auf die die Hubbewegung übertragen wird. Diese Antriebsstange 106 ist unmittelbar oder mittelbar mit der Ventilstange 18 verbindbar, um die Bewegung des ersten Ventiltellers 14 zu bewirken.

Die Antriebsstange 106 kann einen Druckmittelkanal 108 aufweisen. Wenigstens ein Einlass 110 in der Antriebsstange 106 stellt eine Fluidverbindung zwischen Druckmittelkanal 108 und Druckmittelkammer 100 her.

Beim Zusammenstauchen und der nachfolgenden Expansion der Feder 102 entsteht durch die Torsion ein Drehmoment, dass auf den Kolben 98 einwirkt. Um zu verhindern, dass dieses Drehmoment auf die Antriebsstange 106 übertragen wird und damit letztlich bis zur zweiten Membran 56 propagiert, ist ein erstes Drehstabilisierungsmittel vorgesehen. Eine kostengünstige Ausführung des Drehstabilisierungsmittels ist ein Gleitlager, mit dem der Kolben 98 drehbar auf der Antriebsstange 106 gelagert ist. Das erste Drehstabilisierungsmittel bzw. das Gleitlager umfasst eine Lagerbuchse 112 mit einem Flansch 114. Zusammen mit einer Lagerscheibe 116 bildet sie das Gleitlager für den Kolben 98. Eine Sicherungsmutter 118 befestigt Gleitlager und Kolben 98 auf der Antriebsstange 106 und sorgt für definierte Kraftverhältnisse im Gleitlager. Lagerbuchse 112 und Lagerscheibe 116 können aus einem kostengünstigen und geeigneten Material wie beispielsweise Polytetrafluorethylen (PTFE) bestehen.

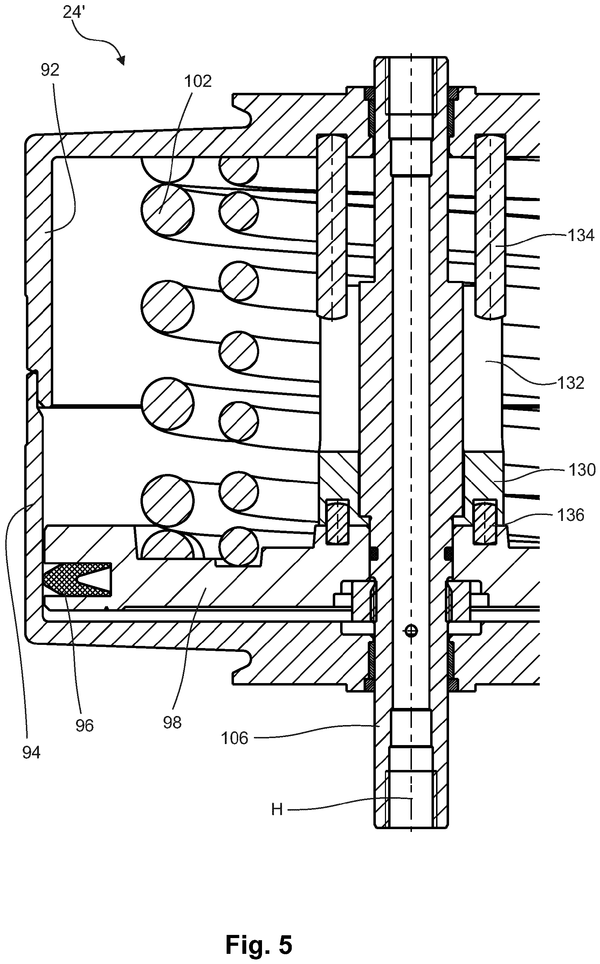

In Fig. 5 ist eine alternative Ausführung des ersten Drehstabilisierungsmittels im Hauptantrieb 24' gezeigt. Der Kolben 98 umfasst einen Kolbenabschnitt 130, der sich die Antriebsstange 106 umgebend entlang der Hubachse H erstreckt und von der Feder 102 umgeben ist. Der Kolbenabschnitt 130 weist eine Ausnehmung 132 auf, die einen Stab 134 aufnimmt, welcher mit einer Stirnplatte des ersten Zylinderteils 92 verbunden ist. Die Ausnehmung 130 erstreckt sich in Richtung der Hubachse H und deckt in Umfangsrichtung nur einen Teil des Umfangs ab. Ausnehmung 130 und Stab 134 sind so dimensioniert, dass der Stab 134 in Richtung der Hubachse H eine Bewegung ausführen kann, eine Bewegung in Umfangsrichtung jedoch gesperrt ist. Dies kann beispielsweise gelöst werden durch einen Rundstab, der mit seiner Längsachse in einem Längsschlitz verläuft, dessen Breite etwa dem Durchmesser des Rundstabes entspricht. Auf diese Weise wird verhindert, dass eine von der Feder 102 in den Kolben 98 eingeleitete Torsionskraft zu einer Drehung des Kolbens 98 und nachfolgende Übertragung der Drehung auf die Antriebsstange 106 führt.

Alternativ oder zusätzlich zum Hohlstift 80, der eine Verdrehung von Ventilstange 18 und Hohlstange 20 gegeneinander unterbindet, kann neben einem ersten Drehstabilisierungsmittel im Hauptantrieb 24, 24' auch ein zweites Drehstabilisierungsmittel im Hilfsantrieb 26 vorgesehen sein. Dies kann beispielsweise nach den an Fig. 4 und Fig. 5 erläuterten Prinzipien konstruiert sein. Es kann auch als ein mechanischer Anschlag für den Kolben des Hilfsantriebes 26 in Drehrichtung ausgeführt sein. Mit Hilfe der Drehstabilisierungsmittel wird das Einwirken einer für die Membranen 44 und 56 schädliche Torsion verhindert und die Lebensdauer der Membranen erhöht.

### Bezugszeichenliste

- 2: Gehäuse
- 4: erster Anschluss
- 6: zweiter Anschluss
- 8: Zwischenkammer
- 10: erstes Seitenventil
- 12: zweites Seitenventil
- 14: erstes Schließelement
- 16, 16': zweites Schließelement
- 18: Ventilstange
- 20: Hohlstange
- 22: Gehäuseteil
- 24, 24': Hauptantrieb
- 26: Hilfsantrieb
- 28: Leckageauslass
- 30: Sammelraum
- 32: erste Dichtung
- 34: erster Ventilsitz
- 36: erster Fortsatz
- 38: zweite Dichtung
- 40: zweiter Ventilsitz
- 42: zweiter Fortsatz
- 44: erste Membran
- 46: Außenrand erste Membran
- 48: Innenrand erste Membran
- 50: erstes Klemmelement
- 52: erstes Lager
- 54: Innenraum
- 56: zweite Membran
- 58: Kanal
- 60: Innenrand zweite Membran
- 62: Absatz
- 64: zweites Klemmelement
- 66: Erweiterung
- 68, 68': Tragabschnitt
- 70: zweites Lager
- 72, 72': Ringkörper
- 74, 74': Gewinde
- 76: Außenrand zweite Membran
- 78: Spaltdichtung
- 80: Hohlstift
- 82: Langloch
- 84: Fuge
- 86: Dichtungsnut
- 88: Sicherungsmittel
- 90: Ansatzfläche
- 92: erstes Zylinderteil
- 94: zweites Zylinderteil
- 96: Kolbendichtung
- 98: Kolben
- 100: Druckmittelkammer
- 102: Feder
- 104: Federkammer
- 106: Antriebsstange
- 108: Druckmittelkanal
- 110: Einlass
- 112: Lagerbuchse
- 114: Flansch
- 116: Lagerscheibe
- 118: Sicherungsmutter
- 120: Verbindungsbereich
- 122: Leckagekanal
- 124: Leckagenut
- 126: Querkanal
- 130: Kolbenabschnitt
- 132: Ausnehmung
- 134: Stab
- 136: Verbinder

## Patentansprüche

1. Doppelsitzventil mit einem ersten Schließelement (14), welches einem ersten Ventilsitz (34) zugeordnet ist, und einem zweiten Schließelement (16; 16'), welches einem zweiten Ventilsitz (40) zugeordnet ist, mit einer Hohlstange (20), die mit dem zweiten Schließelement (16; 16') verbunden ist, und einer Ventilstange (18), die mit dem ersten Schließelement (14) verbunden und die Hohlstange (20) durchsetzend angeordnet ist, mit einer ersten Membran (44), welche an der Hohlstange (20) und an einem Gehäuse (2) des Doppelsitzventils befestigt ist und mit einer zweiten Membran (56), die einen Kanal (58) zwischen Ventilstange (18) und Hohlstange (20) abdichtend angeordnet ist, wobei das zweite Schließelement (16; 16') einen Ringkörper (72; 72') umfasst, welcher in einem Verbindungsbereich (120) mit einem Tragabschnitt (68) verbunden ist, wobei Ringkörper (72; 72') und Tragabschnitt (68) zur Klemmung der zweiten Membran (56) eingerichtet und der Verbindungsbereich (120) mit der zweiten Membran (56) und mit einer Spaltdichtung (78) gegen einen Innenraum (54) abgedichtet sind, wobei ein zweites Lager (70) ein zweites Klemmelement (64) lagernd und führend angeordnet ist,
**dadurch gekennzeichnet, dass** der Tragabschnitt (68) einen Leckagekanal (122) aufweist, welcher einen Abschnitt einer Fluidverbindung zwischen Verbindungsbereich (120) und Kanal (58) bildet, und dass das zweite Lager (70) in dem Tragabschnitt (68) aufgenommen ist.

2. Doppelsitzventil nach Anspruch 1, **dadurch gekennzeichnet, dass** die Hohlstange (20) die erste Membran (44) und ein erstes Klemmelement (50) einstückig in Richtung einer Hubachse (H) durchsetzt.

3. Doppelsitzventil nach einem der vorhergehenden Ansprüche, **dadurch gekennzeichnet, dass** die Spaltdichtung (78) eingerichtet und angeordnet ist, mit dem zweiten Ventilsitz (40) zusammenzuwirken.

4. Doppelsitzventil nach Anspruch 3, **dadurch gekennzeichnet, dass** ein eine Verdrehung von Ringkörper (72) und Tragabschnitt (68) gegeneinander verhinderndes Sicherungsmittel (88) am zweiten Schließelement (16; 16') angeordnet ist.

5. Doppelsitzventil nach einem der vorgehenden Ansprüche, **dadurch gekennzeichnet, dass** ein Hauptantrieb (24; 24') einen in einem Zylinder (92, 94) verschiebbaren Kolben (98), eine Antriebsstange (106) und eine Feder (102) aufweist, und dass ein erstes Drehstabilisierungsmittel vorgesehen ist, welches eine Hubbewegung von wenigstens einer von Ventilstange (18) und Hohlstange (20) gegen Verdrehung stabilisiert.

6. Doppelsitzventil nach Anspruch 5, **dadurch gekennzeichnet, dass** das erste Drehstabilisierungsmittel eine den Kolben (98) drehbar auf der Antriebsstange (106) lagernde Gleitlagerung umfasst.

7. Doppelsitzventil nach Anspruch 5, **dadurch gekennzeichnet, dass** das erste Drehstabilisierungsmittel einen Kolbenabschnitt (130) mit einer einen Stab (134) aufnehmenden Ausnehmung (132) umfasst, wobei der Stab in der Ausnehmung (132) nur in Richtung der Hubachse (H) beweglich ist.

8. Doppelsitzventil nach einem der Ansprüche 5 bis 7, **dadurch gekennzeichnet, dass** ein Hilfsantrieb (26) vorgesehen ist, welcher ein zweites Drehstabilisierungsmittel umfasst.

## Claims

1. A double-seat valve comprising a first closing element (14), which is assigned to a first valve seat (34), and a second closing element (16; 16'), which is assigned to a second valve seat (40), comprising a hollow rod (20), which is connected to the second closing element (16; 16'), and a valve rod (18), which is connected to the first closing element (14) and is arranged so as to pass through the hollow rod (20), comprising a first diaphragm (44), which is fastened to the hollow rod (20) and to a housing (2) of the double-seat valve, and comprising a second diaphragm (56), which is arranged so as to seal off a channel (58) between the valve rod (18) and the hollow rod (20), wherein the second closing element (16; 16') comprises an annular body (72; 72'), which is connected in a connection region (120) to a support portion (68), wherein the annular body (72; 72') and support portion (68) are designed to clamp the second diaphragm (56) and the connection region (120) is sealed off from an inner space (54) by means of the second diaphragm (56) and by means of a gap seal (78), wherein a second bearing (70) is arranged so as to support and guide a second clamping element (64), **characterized in that** the support portion (68) comprises a leakage channel (122), which forms a portion of a fluid connection between the connection region (120) and channel (58), and **in that** the second bearing (70) is received in the support portion (68).

2. The double-seat valve according to claim 1, **characterized in that** the hollow rod (20) passes through the first diaphragm (44) and a first clamping element (50) as a single piece in the direction of a lift axis (H).

3. The double-seat valve according to any one of the preceding claims, **characterized in that** the gap seal (78) is designed and arranged to cooperate with the second valve seat (40).

4. The double-seat valve according to claim 3, **characterized in that** a securing means (88) that prevents rotation of the annular body (72) and support portion (68) relative to one another is arranged on the second closing element (16; 16').

5. The double-seat valve according to any one of the preceding claims, **characterized in that** a main drive (24; 24') comprises a piston (98) that can be moved in a cylinder (92, 94), a drive rod (106) and a spring (102), and **in that** a first rotational stabilization means is provided, which stabilizes a lifting movement of at least one of the valve rod (18) and hollow rod (20) against rotation.

6. The double-seat valve according to claim 5, **characterized in that** the first rotational stabilization means comprises a sliding bearing that rotatably supports the piston (98) on the drive rod (106).

7. The double-seat valve according to claim 5, **characterized in that** the first rotational stabilization means comprises a piston portion (130) having a recess (132) that receives a bar (134), wherein the bar can move in the recess (132) only in the direction of the lift axis (H).

8. The double-seat valve according to any one of claims 5 to 7, **characterized in that** an auxiliary drive (26) is provided, which comprises a second rotational stabilization means.

## Revendications

1. Soupape à double siège avec un premier élément de fermeture (14), lequel est associé à un premier siège de soupape (34), et un second élément de fermeture (16 ; 16'), lequel est associé à un second siège de soupape (40), avec une tige creuse (20), qui est reliée au second élément de fermeture (16 ; 16'), et une tige de soupape (18), qui est reliée au premier élément de fermeture (14) et est disposée de manière à traverser la tige creuse (20), avec une première membrane (44), qui est fixée à la tige creuse (20) et à un boîtier (2) de la soupape à double siège et avec une seconde membrane (56), qui est disposée de manière à étanchéifier un canal (58) entre la tige de soupape (18) et la tige creuse (20), dans laquelle le second élément de fermeture (16 ; 16') comprend un corps annulaire (72 ; 72'), lequel est relié à un segment porteur (68) dans une zone de liaison (120), dans laquelle le corps annulaire (72 ; 72') et le segment porteur (68) sont ajustés pour serrer la seconde membrane (56) et la zone de liaison (120) est étanchéifiée avec la seconde membrane (56) et avec un joint d'interstice (78) vis-à-vis d'un espace intérieur (54), dans laquelle un second palier (70) est disposé de manière à loger et à guider un second élément de serrage (64), **caractérisée en ce que** le segment porteur (68) présente un canal de fuite (122), lequel forme un tronçon d'une liaison fluidique entre la zone de liaison (120) et le canal (58), et que le second palier (70) est intégré dans le segment porteur (68).

2. Soupape à double siège selon la revendication 1, **caractérisée en ce que** la tige creuse (20) traverse d'un seul tenant la première membrane (44) et un premier élément de serrage (50) dans la direction d'un axe de levage (H).

3. Soupape à double siège selon l'une des revendications précédentes, **caractérisée en ce que** le joint d'interstice (78) est disposé et ajusté pour interagir avec le second siège de soupape (40).

4. Soupape à double siège selon la revendication 3, **caractérisée en ce qu'**un moyen d'immobilisation (88) est disposé sur le second élément de fermeture (16 ; 16') empêchant la rotation du corps annulaire (72) et du segment porteur (68) l'un par rapport à l'autre.

5. Soupape à double siège selon l'une des revendications précédentes, **caractérisée en ce qu'**un entraînement principal (24 ; 24) présente un piston (98) déplaçable dans un vérin (92, 94), une tige d'entraînement (106) et un ressort, et qu'un premier moyen de stabilisation en rotation est prévu, lequel stabilise un mouvement de levage de l'une au moins desdites tige de soupape (18) et tige creuse (20) en s'opposant à leur rotation.

6. Soupape à double siège selon la revendication 5, **caractérisée en ce que** le premier moyen de stabilisation en rotation comprend un palier lisse logeant le piston (98) orientable sur la tige d'entraînement (106).

7. Soupape à double siège selon la revendication 5, **caractérisée en ce que** le premier moyen de stabilisation en rotation comprend un segment de piston (130) avec un évidement (132) intégrant une bielle (134), dans laquelle la bielle n'est mobile dans l'évidement (132) que dans la direction de l'axe de levage (H).

8. Soupape à double siège selon l'une des revendications 5 à 7, **caractérisée en ce qu'**un entraînement auxiliaire (26) est prévu, lequel comprend un second moyen de stabilisation en rotation.
